# FASCICULE DE BREVET EUROPEEN

(11) **EP 3 274 688 B1**
(45) Date de publication et mention de la délivrance du brevet: **11.08.2021**
(21) Numéro de dépôt: 16716500.0
(22) Date de dépôt: 25.03.2016
(51) Int. Cl.: G01N 15/14, G01N 15/06

(54) **APPAREIL HYDROFOCUS A SOLUTION D'ANALYSE UNIQUE ET PROCÉDÉ**
HYDROFOKUSVORRICHTUNG MIT EINER EINZIGEN ANALYSELÖSUNG UND VERFAHREN
HYDROFOCUS APPARATUS COMPRISING A SINGLE ANALYSIS SOLUTION AND METHOD

(30) Priorité: 26.03.2015 FR 1552527
(43) Date de publication de la demande: 31.01.2018
(73) Titulaire: BIT Group France, 34099 Montpellier (FR)
(72) Inventeur: CHAMPSEIX, Henri, 34980 Montferrier/lez (FR); LEVEAU, Maxime, 34690 Fabrègues (FR); MAGNIN, Olivier, 38530 Chapareillan (FR)
(74) Mandataire: IPAZ
(86) Numéro de dépôt international: PCT/EP2016/056724
(87) Numéro de publication internationale: WO 2016/151140

(56) Documents cités:
- US-A1- 2008 153 170
- US-A1- 2009 142 744
- US-A1- 2010 273 168
- US-A1- 2013 216 454
- "FLOW CYTOMETRY EDUCATIONAL GUIDE", , 15 décembre 2005 (2005-12-15), XP055073571, Extrait de l'Internet: URL:http://www.dako.com/08065_15dec05_guid e_to_flow_cytometry.pdf [extrait le 2013-07-30]
- TOURNIER F ET AL: "CILIATED DIFFERENTIATION OF RABBIT TRACHEAL EPITHELIAL CELLS IN VITRO", EUROPEAN JOURNAL OF CELL BIOLOGY, WISSENSCHAFLICHE VERLAGSGESELLSCHAFT, STUTTGART, DE, vol. 77, no. 3, 1 novembre 1998 (1998-11-01), pages 205-213, XP009029243, ISSN: 0171-9335

## Description

La présente invention se rapporte à un appareil de différenciation optique des sous populations de globules blancs comprenant une cuve à circulation à manchon actif.

D'une façon générale, un appareil d'analyse permet de dénombrer et de caractériser les différents types de globules présents dans le sang, à savoir :
- le nombre total de globules blancs ;
- plus spécifiquement, le nombre de globules blancs par sous populations (basophiles, éosinophiles, neutrophiles, monocytes et lymphocytes) ;
- le nombre de globules rouges et de plaquettes ; et
- le taux d'hémoglobine.

Plusieurs techniques d'analyse sont connues, notamment :
- le dosage de l'hémoglobine est effectué après la lyse des globules rouges, c'est-à-dire la destruction de la membrane des globules rouges, et par mesure par spectrophotométrie de l'hémoglobine libérée dans le milieu ; le dosage de l'hémoglobine nécessite en outre la stabilisation de l'hémoglobine sous une forme complexée (oxyhémoglobine ou cyan méthémoglobine) de manière à mesurer l'absorbance d'un seul composé à la longueur d'onde appropriée.
- le comptage total des globules blancs est effectué sur l'échantillon de sang par résistivité en réalisant la lyse spécifique des globules rouges et la protection des globules blancs.
- la différenciation des globules blancs et leur comptage par sous population sont effectués :
   ▪ soit par mesure volumétrique en résistivité après lyse spécifique des globules rouges, protection des globules blancs; cela ne permettant cependant pas de différencier toutes les sous populations;
   ▪ soit par voie optique, notamment par cytométrie de flux ; après lyse spécifique des globules rouges et protection des globules blancs, en mesurant différents paramètres (notamment diffraction, fluorescence, absorbance) sur un flux de globules blancs dans l'axe aux petits, moyens et grands angles et éventuellement après ajout d'un agent de marquage (par exemple du noir de chlorazol, ou un colorant marquant l'ADN ou l'ARN, ou un colorant fluorescent) et par mesure à différentes longueurs d'onde ; cette technique permettant de différencier les sous-populations de globules blancs.
- le comptage des globules rouges et des plaquettes se fait sur un échantillon dilué sans ajout de réactif particulier par mesure de résistivité.

Il existe de nombreux automates d'hématologie qui mettent en œuvre ces techniques.

La plupart des automates d'hématologie disposent d'un capteur par impédancemétrie pour le comptage absolu des globules blancs et d'un capteur optique pour la différenciation des globules blancs.

Ce capteur optique est généralement constitué de deux éléments :
- Un banc optique contenant la source lumineuse et les éléments de détection (capteurs)
- Une cuve à circulation (appelée également Flow Cell ou cuve optique)

Pour obtenir des résultats fiables, il faut que la zone de mesure optique ait des dimensions limitées (généralement voisines de 100µm x 30µm) et une distribution d'intensité lumineuse homogène. Ces contraintes sont intégrées dans la conception d'un banc optique contenant généralement une partie émission (source lumineuse + lentilles de focalisation) et une partie détection (mise en forme du flux lumineux avec des lentilles et détection sur des cellules photosensibles)

Le second élément participant à la réalisation de la mesure est la cuve à circulation. La difficulté consiste alors à contraindre l'écoulement du flux transportant les cellules à circuler de façon à ce qu'il soit entièrement à l'intérieur de la zone de mesure optique. Si le flux transportant les cellules vient en limite de la zone de mesure optique ou même dépasse celle-ci, les cellules ne reçoivent plus une quantité égale de lumière et la mesure optique se retrouve entachée d'erreur.

On connaît la technologie de cytométrie en flux standard telle que décrite dans les documents US6228652, US5812419 et FR2653885. La solution généralement décrite est l'utilisation d'un ou plusieurs flux de gainage concentrique avec le flux central transportant les cellules. Ce flux de gainage étire le flux central pour en réduire le diamètre et ainsi faire passer les cellules à caractériser les unes après les autres

Cette technologie nécessite souvent des taux de dilution (sang total + réactif) très faibles pour la mesure optique (généralement autour de 1/50 pour un défilement de cellules une à une, incompatibles avec les mesures d'hémoglobine et les mesures résistives réalisées dans le bac de dilution. Ces mesures résistives et d'hémoglobine dans le bac de dilution nécessitent un taux de dilution différent de celui de la mesure optique. Sur le prélèvement de sang total, une dilution spécifique est généralement utilisée pour réaliser la mesure optique. Cette contrainte impose donc des besoins matériels supplémentaires (bacs, électrovannes, systèmes de multidistributions), c'est-à-dire un système hydraulique complexe entrainant ainsi des coûts supplémentaires.

On connaît également la technologie de cuve à circulation à gainage « Passif » telle que décrite dans le document FR2883973 dans lequel on utilise un réactif spécifique permettant de réaliser la mesure résistive (comptage absolu) et la mesure optique (différentiation) à partir de la même dilution et ce dans deux capteurs différents. Le document FR2883973 décrit un système dans lequel l'échantillon dilué est poussé à travers un injecteur dont le diamètre intérieur est de 80µm. Cet échantillon, poussé sous pression par une seringue, est accompagné par un liquide de manchonnage (en règle générale du diluant) également poussé par une seringue. Dans ce cas, ce n'est pas le flux de manchonnage qui impose la largeur du flux échantillon en l'étirant mais la forme et la section de sortie de l'injecteur. Le gainage du flux n'a donc aucun rôle actif.

US 2009/142744 A1 divulgue appareil d'analyse d'un échantillon de sang comprenant :
- un bac de dilution et d'analyse apte à contenir une solution d'analyse obtenue par dilution de l'échantillon de sang dans au moins un réactif, cette solution d'analyse présentant un taux de dilution convenable pour une mesure d'hémoglobine,
- une cuve à circulation comprenant une cuve parallélépipédique, un injecteur et des entrées pour le liquide de manchonnage,
- un système hydraulique,
- un dispositif de mesure optique pour la mesure des sous populations leucocytaires de globules blancs contenus dans la solution d'analyse,
- une unité électronique de pilotage de transferts et de mesure de la solution d'analyse, où:
   - le bac de dilution et d'analyse est directement relié à la cuve à circulation de sorte que la solution d'analyse utilisée pour la mesure du taux d'hémoglobine est également utilisée pour la mesure des sous populations leucocytaires de globules blancs, avec un taux de dilution défini avec un rapport inférieur à 1/160,
   - la cuve à circulation est de type à manchon actif,
   - le dispositif de mesure optique est associé à la cuve à circulation,
   - la cuve à circulation et le système hydraulique sont conçus pour générer un flux de la solution d'analyse, par hydrofocus à manchon actif.

Des principes fondamentales de la cytométrie en flux sont divulgués dans le "Flow Cytometry Educational Guide, 2nd Edition", éditeur Sonja Wulff, publié par Dako, Fort Collins, Colorado, USA.

US 2010/273168 A1 et US 2008/153170 A1 divulguent des autres analyseurs appliquant le principe de la cytométrie en flux aux échantillons de sang. Des autres analyseurs appliquant ce principe sont divulgués dans US 2013/216454 A1 et TOURNIER F ET AL: "CILIATED DIFFERENTIATION OF RABBIT TRACHEAL EPITHELIAL CELLS IN VITRO", EUROPEAN JOURNAL OF CELL BIOLOGY, WISSENSCHAFLICHE VERLAGSGESELLSCHAFT, STUTTGART, DE, vol. 77, no. 3, 1 novembre 1998 (1998-11-01), pages 205-213, ISSN: 0171-9335.

En effet, dans le cas de la cytométrie en flux standard, les contraintes fluidiques imposent une cuve de mesure dont la dimension transversale est de l'ordre de 250 µm (en fonction du diamètre de l'échantillon, du diamètre de l'injecteur, de la vitesse du flux). Dans le cas de la cuve à gainage passif, cette contrainte peut être levée et ainsi permettre une dimension transversale de 1 à 5 mm. Une telle cuve peut alors être réalisée, au moins partiellement, en matériau plastique injecté et ainsi participer grandement à la réduction des coûts.

Le fait d'utiliser un manchonnage passif entraîne néanmoins un inconvénient. En effet, le manchonnage sans pression ne permet pas d'étirer le flux de l'échantillon après son passage dans l'injecteur créant ainsi un gradient de vitesse (rapport d'environ 2.5 entre la vitesse la plus faible et la plus élevée) sur toute la section du flux. Les cellules, contrairement à la cytométrie de flux classique, passent à des vitesses différentes selon leur position dans le flux au moment de la mesure. Ceci a donc un impact direct sur la largeur mesurée de la cellule. La détection optique de cellules identiques peut générer des impulsions électriques ayant des largeurs temporelles différentes en fonction de la position de ces cellules dans le flux (centrale ou proche du bord, la cellule passant littéralement plus ou moins vite).

Il faut donc gérer des largeurs d'impulsions très disparates. Cette contrainte doit notamment être gérée par les cartes électroniques de détection qui doivent être capable de mesurer des impulsions allant à des vitesses différentes. Ceci implique dès lors des bandes passantes plus importantes à gérer par ces cartes.

La présente invention a pour but de remédier aux inconvénients précités en proposant un nouvel appareil permettant une meilleure différenciation des sous populations de globules blancs par rapport notamment à la technique de manchon passif.

Un autre but de l'invention est un nouvel appareil dont le coût de production est maîtrisé par rapport aux appareils de l'art antérieur.

Un autre but de l'invention est un nouvel appareil simple de conception et robuste.

La présente invention a encore pour but un nouvel appareil permettant de réaliser des mesures optiques à une cadence au-delà de 60 tests ou analyses par heure.

On atteint au moins l'un des objectifs précités avec un appareil d'analyse d'un échantillon de sang selon la revendication 1, cet appareil comprenant :
- un bac de dilution et d'analyse apte à contenir une solution d'analyse obtenue par dilution de l'échantillon de sang dans au moins un réactif, cette solution d'analyse présentant un taux de dilution convenable pour une mesure d'hémoglobine,
- une cuve à circulation comprenant une cuve parallélépipédique, un injecteur et des entrées pour le liquide de manchonnage,
- un système hydraulique (électrovannes, seringues, moteur, circuit de canalisations,...)
- un dispositif de mesure optique pour la mesure des sous populations leucocytaires de globules blancs contenus dans la solution d'analyse,
- une unité électronique de pilotage de transferts et de mesure de la solution d'analyse, où
- le bac de dilution et d'analyse est directement relié à la cuve à circulation de sorte que la solution d'analyse utilisée pour la mesure du taux d'hémoglobine est également utilisée pour la mesure des sous populations leucocytaires de globules blancs, avec un taux de dilution défini avec un rapport inférieur à 1/160, de préférence il est égal à 1/170,
- la cuve à circulation est de type à manchon actif,
- le dispositif de mesure optique est associé à la cuve à circulation,
   l'injecteur présente un diamètre intérieur de 200 µm, et
- la cuve à circulation et le système hydraulique sont conçus pour générer un flux de la solution d'analyse, par hydrofocus à manchon actif, ayant un diamètre compris entre 70 et 90 µm de façon à avoir suffisamment de cellules pour la mesure optique.

Avantageusement, le lien directe entre le bac de dilution et d'analyse d'une part et la cuve à circulation d'autre part peut signifier que ce lien est directe de façon indépendante, par exemple sans autres connexions de conduit de diluant notamment.

L'invention permet d'utiliser par exemple une dilution au 1/170, adaptée pour la mesure d'hémoglobine et le comptage de globules blancs, pour réaliser la différenciation leucocytaire avec la technologie à manchon actif, c'est-à-dire hydrofocus (contraction de l'expression anglaise « hydrodynamic focusing »). Les mesures de l'hémoglobine et des sous populations leucocytaires sont réalisées à partir d'une unique dilution de l'échantillon de sang.

Avec l'appareil selon l'invention, on utilise une même solution d'analyse pour la mesure de l'hémoglobine et la mesure optique dans une cuve à circulation de type hydrofocus, c'est à dire à manchon actif. Ainsi, la solution d'analyse utilisée pour la mesure de l'hémoglobine et la solution d'analyse utilisée pour la mesure optique présentent le même taux de dilution : cela a pour avantage d'économiser une étape supplémentaire de dilution. En particulier, pour réaliser la mesure optique, on transfert directement une partie de la solution d'analyse prévue pour la mesure d'hémoglobine.

Par ailleurs, on utilise ici un gainage actif (hydrofocus) dans la cuve à circulation, c'est-à-dire que l'on utilise une solution de gainage qui vient réduire le diamètre du flux de la solution d'analyse dans la cuve à circulation de telle sorte que toutes les cellules dans ce flux sont à la même vitesse quelles que soient leurs positions dans la section du flux.

Dans l'art antérieur, lors de la mesure optique,
- soit on utilise une faible dilution avec un rapport de l'ordre de 1/50 dans le but de :
- maintenir une concentration élevée des cellules,
- permettre un alignement de ces cellules par manchonnage actif,
- permettre des mesures optiques rapides des cellules qui se succèdent ;
- soit on utilise une forte dilution comme dans le document EP1866651 avec un rapport de l'ordre de 1/173 dans le but de conserver le même taux de dilution que la mesure du taux d'hémoglobine.

Selon la présente invention, on utilise une solution d'analyse unique pour la mesure optique et la mesure du taux d'hémoglobine.

Dans le cadre de manchonnage passif selon l'art antérieur, le flux de manchonnage ne réduit pas le flux de la solution d'analyse sortant de l'injecteur. Cet injecteur doit donc avoir une ouverture identique au diamètre souhaité pour le flux de la solution d'analyse, à savoir par exemple 80µm : ce qui correspond à un injecteur onéreux. Avec la présente invention, on utilise un injecteur moins coûteux ayant un diamètre intérieur de 200 µm. C'est le gainage (manchon actif) qui réduit le diamètre du flux à un diamètre entre 70 et 90 µm. Un tel injecteur est moins coûteux en fabrication que celui présentant un diamètre de 80µm par exemple comme préconisé dans des appareils de l'art antérieur dans le cadre d'un manchonnage passif (diamètre injecteur = diamètre du flux de la solution d'analyse). Dans l'art antérieur, dans le cadre de la cytométrie de flux classique, lorsque les injecteurs sont de l'ordre de 200µm, ce sont les moyens mis en œuvre pour réduire le diamètre de flux de la solution d'analyse de 200µm à 5-50µm, qui sont plus coûteux pour les plus faibles diamètres (ces moyens sont des moyens de réglage du débit, de la pression en plus de ceux pour réaliser la double dilution).

La présente invention est notamment remarquable, mais pas uniquement, sur le fait que le compromis technologique sur les dimensions de l'injecteur et du flux de la solution d'analyse permet de réduire les coûts d'un tel appareil tout en maintenant une cadence d'analyse très compétitive telle que par exemple 60 tests ou analyses par heure. La cadence est liée au ratio entre le taux de dilution, le diamètre du flux de la solution d'analyse et le traitement analytique des mesures optiques.

Un manchonnage actif permet d'imposer une même vitesse de déplacement aux cellules de la solution d'analyse. Cela procure des avantages non négligeables dans le traitement des signaux issus de la mesure optique.

On peut utiliser comme solution d'analyse celle qui est notamment définie dans le document EP1866651, cette solution d'analyse étant obtenu en introduisant un monoréactif dans un échantillon de sang.

Avec l'appareil selon la présente invention, on utilise une unique solution d'analyse (une seule dilution), on met en place un manchonnage actif pour réduire le diamètre du flux et on réalise les mesures optiques à une cadence convenable.

Selon une caractéristique avantageuse de l'invention, le flux de la solution d'analyse peut présenter un diamètre de 80 µm pour la mesure optique. Cette valeur est un bon compromis permettant à l'automate d'assurer une cadence rapide et de ne pas être trop coûteux.

Avantageusement, la cuve parallélépipédique peut présenter un coté intérieur de 250 µm. Il s'agit de la largeur dans laquelle traversent le flux de la solution d'analyse et le flux de manchonnage. Cette cuve parallélépipédique peut être une cuve standard du commerce de façon à limiter le coût de l'appareil.

Selon l'invention, le bac de dilution et d'analyse peut comprendre un spectrophotomètre pour réaliser une mesure d'hémoglobine directement à partir de la solution d'analyse contenue dans ledit bac.

Il peut également comprendre un dispositif électrique pour le comptage des globules blancs par une mesure de résistivité de la solution d'analyse contenue dans ledit bac.

Selon l'invention, le dispositif de mesure optique peut également être configuré pour réaliser un comptage et la différenciation des cellules contenues dans la solution d'analyse.

Selon une caractéristique avantageuse de l'invention, la cuve à circulation comprend des moyens de pression paramétrés pour que des cellules dans la solution d'analyse circulent dans un flux sans gradient de vitesse sur une section du flux. Cela peut être mis en œuvre par l'utilisation de seringues, circuit hydraulique et des électrovannes.

Selon un autre aspect de l'invention, il est proposé un procédé d'analyse d'un échantillon de sang, ce procédé comprenant les étapes suivantes:
- mesure d'un taux d'hémoglobine d'une solution d'analyse obtenue par mélange (dilution) de l'échantillon de sang avec au moins un réactif dans un bac de dilution et d'analyse. Le procédé comprend également les étapes suivantes :
   - transfert direct, sans dilution, d'au moins une partie de ladite solution d'analyse vers une cuve à circulation,
   - génération par manchonnage actif dans la cuve à circulation et au moyen d'un injecteur présentant un diamètre intérieur de 200 µm, d'un flux de la solution d'analyse, ce flux ayant un diamètre compris entre 70 et 90 µm,
   - mesure optique des sous populations leucocytaires dans le flux de la solution d'analyse, cette solution d'analyse ayant le même taux de dilution que la solution d'analyse utilisée pour la mesure du taux d'hémoglobine ; ce taux de dilution étant défini avec un rapport inférieur à 1/160, de préférence égal à 1/170.

En particulier, on réalise en outre une mesure résistive directement à partir de ladite solution d'analyse dans ledit bac de dilution et d'analyse.

Selon un mode de mise en œuvre avantageux de l'invention, lors de la mesure optique, des cellules sont détectées, et pour chaque cellule détectée, on applique un filtre de largeur pour éliminer toute détection présentant une largeur impulsionnelle supérieure à une valeur prédéterminée. Ce filtrage est notamment rendu possible par le fait que les cellules circulent toutes à la même vitesse lors de la mesure optique, par conséquent une impulsion, résultant d'une détection d'une cellule, doit présenter une certaine largeur temporelle quelle que soit la cellule détectée. Une largeur trop grande correspond à un défaut de détection tel que par exemple une semi-coïncidence, deux cellules détectées dans la zone optique de détection.

D'autres avantages et caractéristiques de l'invention apparaîtront à l'examen de la description détaillée d'un mode de mise en œuvre nullement limitatif, et des dessins annexés, sur lesquels :
La figure 1 est une vue schématique simplifiée générale de l'appareil selon l'invention,
La figure 2 est une vue simplifiée de la cuve à circulation selon l'invention,
La figure 3 est un schéma illustrant la vitesse de circulation de cellules dans le flux de la solution d'analyse selon l'invention,

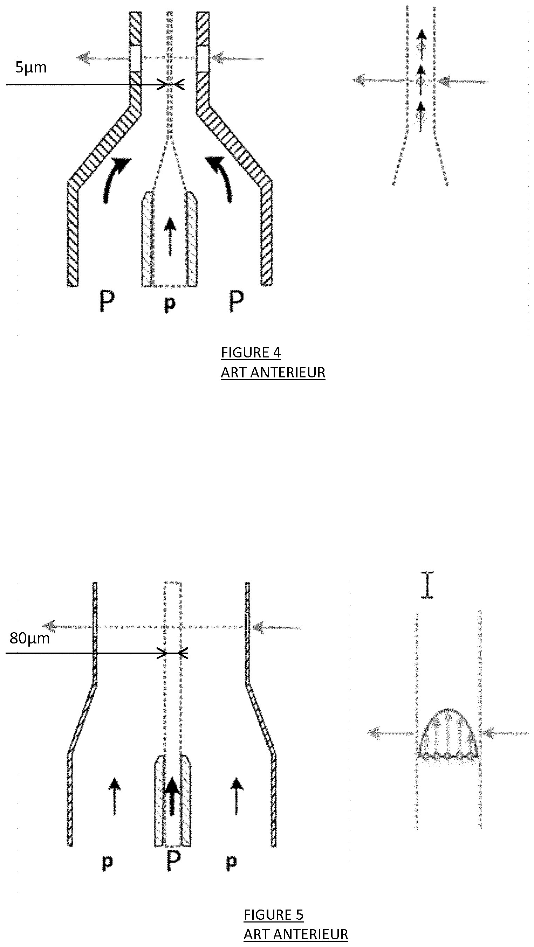

La figure 4 est une vue schématique simplifiée d'une cuve à circulation de cytométrie en flux standard selon l'art antérieur,
La figure 5 est une vue schématique simplifiée d'une cuve à circulation avec système de gainage passif selon l'art antérieur,
Les figures 6 et 7 sont des diagrammes illustrant la dispersion des cellules en fonction de leur largeur, sans filtrage, après une mesure optique respectivement avec et sans technologie hydrofocus, et
Les figures 8 et 9 sont des diagrammes illustrant la dispersion des cellules en fonction de la diffraction et de l'absorbance, avec filtrage, après une mesure optique respectivement avec et sans technologie hydrofocus.

La présente invention se rapporte à un appareil de différenciation optique des sous populations de globules blancs et de mesure d'hémoglobine à partir d'une dilution unique, cette dilution est adaptée pour la mesure d'hémoglobine ; la différenciation leucocytaire étant réalisée dans une cuve à circulation à manchon actif.

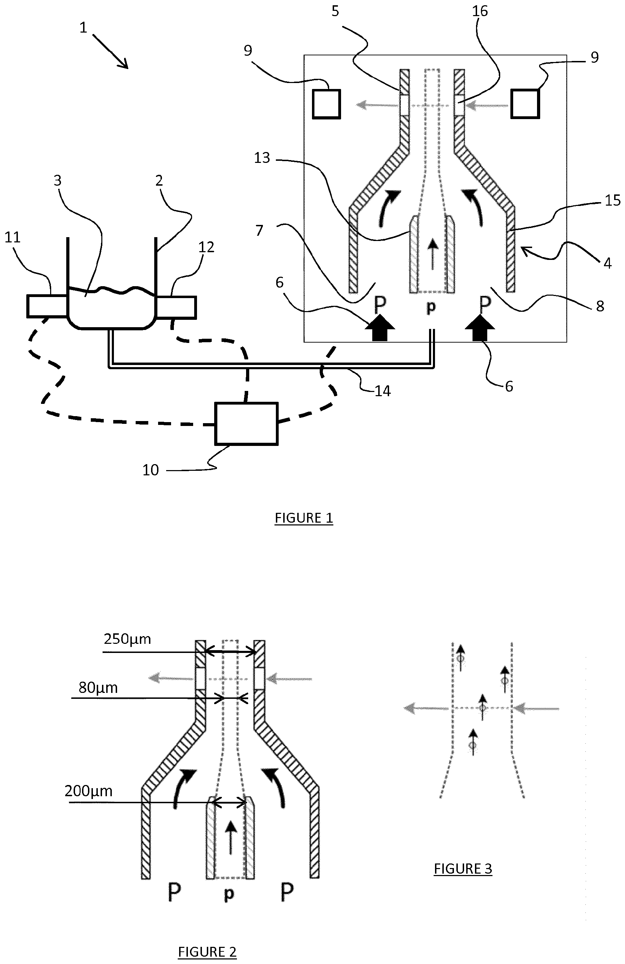

Sur la figure 1 on voit un appareil d'analyse 1 sous une représentation schématique très simplifiée comprenant un bac de dilution et d'analyse 2 dans lequel se trouve une solution d'analyse 3. Cette solution d'analyse est notamment constituée d'un échantillon de sang, d'un diluant et d'un mono réactif tel que par exemple décrit dans le document EP1866651. D'autres solutions peuvent être utilisées à condition d'être apte à subir une mesure de taux d'hémoglobine.

On distingue un spectromètre 11 permettant de mesurer sur cette solution d'analyse 3 dans le bac de dilution 2, après la lyse des globules rouges, le taux d'hémoglobine.

On distingue également un dispositif électrique 12 permettant de mesurer la résistivité de la solution d'analyse 3.

Avantageusement, le taux de dilution de la solution d'analyse présente un ratio de 1/170 permettant la mesure du taux d'hémoglobine. Une ou plusieurs canalisations 14 permettent de prélever une partie de la solution d'analyse 3 et de l'injecter directement dans la cuve à circulation globalement représentée en 4. Ce transfert se fait directement sans dilution de sorte que le taux de dilution est le même entre la mesure du taux d'hémoglobine réalisée directement dans le bac de dilution et d'analyse 2 et la mesure optique qui aura lieu dans la cuve à circulation 4.

Le diamètre du flux est adapté au taux de dilution de façon à avoir suffisamment de cellules pour permettre des traitements statistiques sur les sous populations leucocytaires.

Sur la figure 2 on voit un peu plus en détail la cuve à circulation 4 comprenant un canal supérieur 5 qui est une cuve parallélépipédique de côtés intérieurs de 250µm. Sur les figures 1 et 2, la base 15 de la cuve à circulation présente un diamètre plus grand que le canal 5 de façon à pouvoir accueillir des entrées 7, 8 qui forment en fait une ouverture circulaire autour d'un injecteur 13. Les entrées 7, 8 permettent le passage d'un flux de manchonnage injecté sous pression tout autour de l'injecteur 13. Ce dernier, l'injecteur 13, reçoit également sous pression la solution d'analyse 3 amenée par la canalisation 14. Des moyens de pressions 6 tels que des circuits hydrauliques, électrovannes et/ou des seringues permettant d'appliquer des niveaux de pressions appropriées dans l'injecteur 13 et dans les entrées 7, 8 de façon à créer un manchonnage actif. Dans ce cas, le diamètre du flux sortant de l'injecteur 13 vers le canal 5 est réduit. Avantageusement le diamètre intérieur de l'injecteur est de 200µm, le diamètre du flux dans le canal 5 étant idéalement de 80µm. Lorsqu'on se trouve en condition de manchonnage actif, la vitesse des cellules dans le flux de la solution d'analyse dans le canal 5 est identique en tout point. La figure 3 illustre ce phénomène de gradient nul sur une section du flux.

Des fenêtres 16 sont disposées sur le canal 5 de façon à permettre à un dispositif de mesure optique 9 (émetteur, récepteur, lentilles et autres composants optiques et électroniques) de réaliser la différenciation leucocytaire

Une unité électronique 10 est prévue pour piloter le transfert de la solution d'analyse depuis le bac de dilution et d'analyse vers la cuve à circulation et de commander notamment les différentes mesures de spectrométrie, de résistivité, optiques... cette unité peut être dotée d'un microcontrôleur configuré pour réaliser ces différentes tâches.

Lors de la mesure optique, l'unité électronique peut être configurée pour appliquer un filtre sur la largeur des impulsions de façon à éliminer les semi-coïncidences, c'est-à-dire le défaut de détection simultanée de deux cellules dans la zone optique de détection dont résulte une impulsion d'une largeur plus importante.

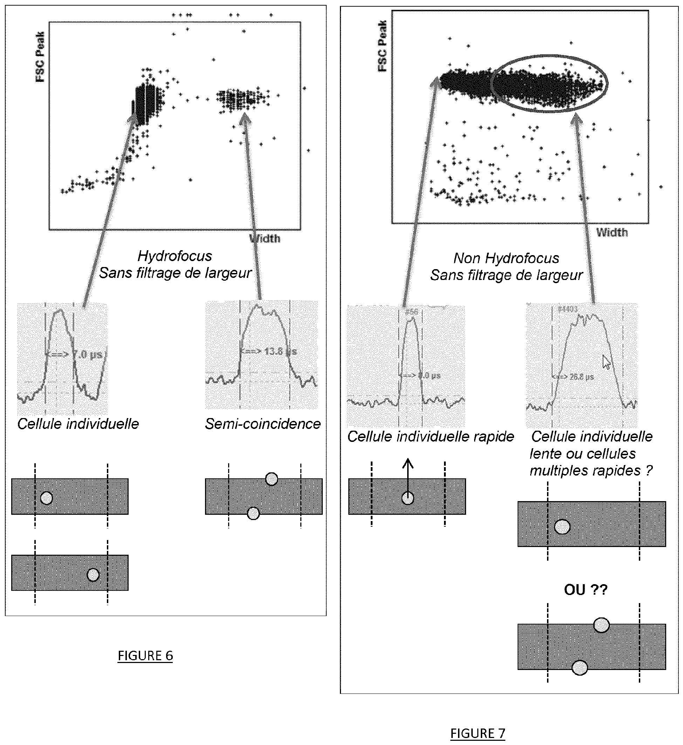

Sur les figures 6 et 7 on distingue deux diagrammes résultants de l'analyse après mesure optique de cellules calibrées de 7µm de diamètre. Sur la figure 6, le flux de la solution à analyser est généré selon la présente invention par manchonnage actif (hydrofocus). Sur la figure 7, le flux de la solution à analyser est généré sans hydrofocus. L'axe des ordonnées représente l'amplitude du signal résultant de la diffraction de la source lumineuse (Forward scattered) sur les cellules. Chaque point sur le diagramme représente le niveau de chaque cellule sur l'axe des ordonnées et sa largeur associée sur l'axe des abscisses. Comme toutes les particules se déplacent à la même vitesse dans le flux, la technologie hydrofocus permet de distinguer les semi-coïncidences par la différence de largeur. Sur la figure 6 par exemple, la largeur mesurée pour une semi-coïncidence est environ deux fois plus grande que la largeur mesurée pour une cellule détectée individuellement. A l'inverse, sans technologie hydrofocus, les cellules se déplacent à des nombreuses vitesses différentes, donc de nombreuses largeurs différentes sont détectées. Il n'est donc pas possible d'appliquer un filtre de largeur sans rejeter des détections individuelles ayant des largeurs élevées (par exemple une cellule lente) puisque l'on peut confondre ces détections individuelles avec certaines détections de semi-coïncidences (deux cellules rapides).

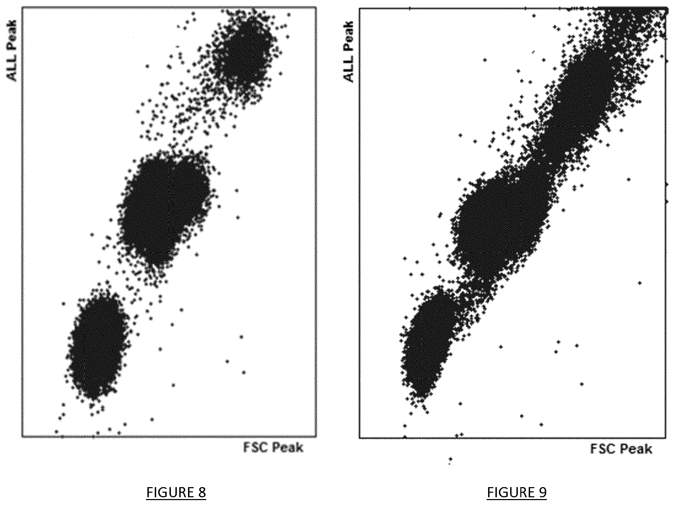

Les figures 8 et 9 sont des diagrammes pour lesquels l'axe des ordonnées représente l'amplitude du signal résultant de l'absorbance de la source lumineuse par la cellule et l'axe des abscisses représente la diffraction sur la cellule. Des cellules en grande concentration de tailles 5 µm et 7 µm de diamètre ont été analysées dans une même dilution. Sur la figure 8, le flux de la solution à analyser est généré selon la présente invention par manchonnage actif (hydrofocus) et on a appliqué un filtre de largeur de 7µs (correspondant à la largeur d'une impulsion d'une cellule de 7µm) sur des impulsions engendrées par la détection des cellules dans la zone optique de détection. Toutes les détections qui produisent des largeurs d'impulsions supérieures à cette limite sont éliminées. Toutes les détections d'événements de semi-coïncidence ont pu être enlevées.

Sur la figure 9, le flux de la solution à analyser est généré sans la technologie hydrofocus et on a également appliqué un filtre de largeur de 7µs. On constate que le filtre de largeur ne permet pas de supprimer toutes les semi-coïncidences (double détection) du fait d'une trop grande dispersion de largeurs impulsionnelles due au gradient de vitesse dans le flux.

Avec la technologie hydrofocus, il est possible d'obtenir des mesures cohérentes, même lorsque la concentration des cellules est très élevée.

Idéalement, l'appareil selon la présente invention :
- utilise l'injecteur de 200µm avec un manchonnage actif afin de réduire le diamètre de l'échantillon à 80µm, et
- utilise une cuve de 250 µm afin de réaliser la réduction du flux grâce au liquide de manchonnage sous pression ayant cette fois un rôle actif dans la forme du flux.

Cela permet d'utiliser un ratio de dilution identique pour la mesure résistive, la mesure optique et la mesure d'hémoglobine, et d'obtenir un profil de vitesse uniforme sur toute la section du flux échantillon. Un profil de vitesse uniforme signifie que les cellules dans le flux d'analyse ont la même vitesse. Cela permet de simplifier le traitement numérique des signaux détectés lors de la mesure optique par rapport au traitement numérique lorsque les cellules ont des vitesses différentes dans la solution d'analyse.

Bien sûr, l'invention n'est pas limitée aux exemples qui viennent d'être décrits et de nombreux aménagements peuvent être apportés à ces exemples sans sortir du cadre de l'invention.

## Revendications

1. Appareil d'analyse (1) d'un échantillon de sang comprenant :
- un bac de dilution et d'analyse (2) apte à contenir une solution d'analyse (3) obtenue par dilution de l'échantillon de sang dans au moins un réactif, cette solution d'analyse présentant un taux de dilution convenable pour une mesure d'hémoglobine,
- une cuve à circulation (4) comprenant une cuve parallelépipédique (5), un injecteur (13) et des entrées (7,8) pour le liquide de manchonnage,
- un système hydraulique (6),
- un dispositif de mesure optique (9) pour la mesure des sous populations leucocytaires de globules blancs contenus dans la solution d'analyse,
- une unité électronique (10) de pilotage de transferts et de mesure de la solution d'analyse, où
- le bac de dilution et d'analyse (2) est directement relié à la cuve à circulation (4) de sorte que la solution d'analyse (3) utilisée pour la mesure du taux d'hémoglobine est également utilisée pour la mesure des sous populations leucocytaires de globules blancs, avec un taux de dilution défini avec un rapport inférieur à 1/160,
- la cuve à circulation (4) est de type à manchon actif,
- le dispositif de mesure optique (9) est associé à la cuve à circulation,
- l'injecteur présente un diamètre intérieur de 200 µm, et
- la cuve à circulation (4) et le système hydraulique (6) sont conçus pour générer un flux de la solution d'analyse (3), par hydrofocus à manchon actif, ayant un diamètre compris entre 70 et 90 µm de façon à avoir suffisamment de cellules pour la mesure optique.

2. Appareil selon la revendication 1, **caractérisé en ce que** le flux de la solution d'analyse (3) présente un diamètre de 80 µm pour la mesure optique.

3. Appareil selon la revendication 1 ou 2, **caractérisé en ce que** la cuve parallélépipédique (5) présente un coté intérieur de 250 µm.

4. Appareil selon l'une quelconque des revendications précédentes, **caractérisé en ce que** le bac de dilution et d'analyse (2) comprend un spectrophotomètre (11) pour réaliser une mesure d'hémoglobine directement à partir de la solution d'analyse (3) contenue dans ledit bac.

5. Appareil selon l'une quelconque des revendications précédentes, **caractérisé en ce que** le bac de dilution et d'analyse (2) comprend un dispositif électrique (12) pour une mesure de résistivité de la solution d'analyse contenue dans ledit bac.

6. Appareil selon l'une quelconque des revendications précédentes, **caractérisé en ce que** le dispositif de mesure optique (9) est également configuré pour réaliser un comptage et la différenciation des cellules contenues dans la solution d'analyse (3).

7. Appareil selon l'une quelconque des revendications précédentes, **caractérisé en ce que** la cuve à circulation (4) comprend des moyens de pression paramétrés pour que des cellules dans la solution d'analyse circulent dans un flux sans gradient de vitesse sur une section du flux.

8. Procédé d'analyse d'un échantillon de sang, ce procédé comprenant les étapes suivantes:
- mesure d'un taux d'hémoglobine d'une solution d'analyse (3) obtenue par mélange de l'échantillon de sang avec au moins un réactif dans un bac de dilution et d'analyse (2), où il comprend en outre les étapes suivantes :
- transfert direct, sans dilution, de ladite solution d'analyse (3) vers une cuve à circulation (4),
- génération par manchonnage actif dans la cuve à circulation (4) et au moyen d'un injecteur (13) présentant un diamètre intérieur de 200 µm, d'un flux de la solution d'analyse (3), ce flux ayant un diamètre compris entre 70 et 90 µm,
- mesure optique des sous populations leucocytaires dans le flux de la solution d'analyse (3), cette solution d'analyse (3) ayant le même taux de dilution que la solution d'analyse (3) utilisée pour la mesure du taux d'hémoglobine ; ce taux de dilution étant défini avec un rapport inférieur à 1/160.

9. Procédé selon la revendication 8, **caractérisé en ce qu'**on réalise en outre une mesure résistive directement à partir de ladite solution d'analyse (3) dans ledit bac de dilution et d'analyse (2).

10. Procédé selon la revendication 8 ou 9, **caractérisé en ce que** lors de la mesure optique, des cellules sont détectées, et pour chaque cellule détectée, on applique un filtre de largeur sur des signaux issus de la mesure optique pour éliminer toute détection présentant une largeur impulsionnelle supérieure à une valeur prédéterminée.

## Patentansprüche

1. Vorrichtung (1) zur Analyse einer Blutprobe, umfassend:
- ein Verdünnungs- und Analysegefäß (2), das geeignet ist, eine Analyselösung (3) zu enthalten, die durch Verdünnen der Blutprobe in mindestens einem Reagenz erhalten wird, wobei diese Analyselösung einen für eine Hämoglobinmessung geeigneten Verdünnungsgrad besitzt,
- eine Durchflusszelle (4) mit einer parallelepipedischen Zelle (5), einem Injektor (13) und Einlässen (7, 8) für die Mantelflüssigkeit,
- ein hydraulisches System (6),
- eine optische Messeinrichtung (9) zur Messung der in der Analyselösung enthaltenen Leukozyten-Subpopulationen der weißen Blutkörperchen,
- eine elektronische Einheit (10) zur Steuerung der Transfers und der Vermessung der Analyselösung,
wobei
- das Verdünnungs- und Analysegefäß (2) derart in direkter Verbindung mit der Durchflusszelle (4) steht, dass die für die Messung des Hämoglobingehalts verwendete Analyselösung (3) auch für die Messung der Leukozyten-Subpopulationen verwendet wird, mit einem Verdünnungsgrad, der mit einem Verhätnis von weniger als 1:160 definiert ist,
- die Durchflusszelle (4) vom Aktivmanteltyp ist,
- die optische Messeinrichtung (9) mit der Durchflusszelle verbunden ist,
- der Injektor einen Innendurchmesser von 200 µm besitzt, und
- die Durchflusszelle (4) und das hydraulische System (6) dazu ausgelegt sind, einen Fluss der Analyselösung (3), durch einen aktiven Mantelhydrofokus, zu erzeugen, der einen Durchmesser zwischen 70 und 90 µm hat, um genügend Zellen für die optische Messung zu haben.

2. Vorrichtung nach Anspruch 1, **dadurch gekennzeichnet, dass** der Fluss der Analyselösung (3) einen Durchmesser von 80 µm für die optische Messung besitzt.

3. Vorrichtung nach Anspruch 1 oder 2, **dadurch gekennzeichnet, dass** die parallelepipedische Zelle (5) eine Innenseitenlänge von 250 µm besitzt.

4. Vorrichtung nach einem der vorhergehenden Ansprüche, **dadurch gekennzeichnet, dass** das Verdünnungs- und Analysegefäß (2) ein Spektralphotometer (11) zur Durchführung einer Hämoglobinmessung direkt von der im Gefäß enthaltenen Analyselösung (3) aufweist.

5. Vorrichtung nach einem der vorhergehenden Ansprüche, **dadurch gekennzeichnet, dass** das Verdünnungs- und Analysegefäß (2) eine elektrische Einrichtung (12) für eine Widerstandsmessung der im Gefäß enthaltenen Analyselösung aufweist.

6. Vorrichtung nach einem der vorhergehenden Ansprüche, **dadurch gekennzeichnet, dass** die optische Messeinrichtung (9) auch zur Durchführung einer Zählung und Differenzierung von in der Analyselösung (3) enthaltenen Zellen ausgebildet ist.

7. Vorrichtung nach einem der vorhergehenden Ansprüche, **dadurch gekennzeichnet, dass** die Durchflusszelle (4) Druckmittel aufweist, die so parametriert sind, dass Zellen in der Analyselösung in einem Fluss ohne einen Geschwindigkeitsgradienten über einen Querschnitt des Flusses strömen.

8. Verfahren zur Analyse einer Blutprobe, wobei das Verfahren die folgenden Schritte umfasst:
- Messen eines Hämoglobingehalts einer durch Mischen der Blutprobe mit mindestens einem Reagenz erhaltenen Analyselösung (3) in einem Verdünnungs- und Analysegefäß (2),
wobei es ferner die folgenden Schritte umfasst:
- direkte Übertragung, ohne Verdünnung, der Analyselösung (3) zu einer Durchflusszelle (4),
- Erzeugung eines Flusses der Analyselösung (3) durch aktive Ummantelung in der Durchflusszelle (4) und mittels eines Injektors (13) mit einem Innendurchmesser von 200 µm, wobei dieser Fluss einen Durchmesser zwischen 70 und 90 µm besitzt,
- optische Messung der Leukozyten-Subpopulationen im Fluss der Analyselösung (3), wobei die Analyselösung (3) den gleichen Verdünnungsgrad besitzt wie die für die Messung des Hämoglobingehalts verwendete Analyselösung (3), wobei der Verdünnungsgrad mit einem Verhältnis von weniger als 1/160 definiert ist.

9. Verfahren nach Anspruch 8, **dadurch gekennzeichnet, dass** ferner eine Widerstandsmessung direkt von der Analyselösung (3) in dem Verdünnungs- und Analysegefäß (2) durchgeführt wird.

10. Verfahren nach Anspruch 8 oder 9, **dadurch gekennzeichnet, dass** bei der optischen Messung Zellen detektiert werden und für jede detektierte Zelle ein Breitenfilter auf Signale aus der optischen Messung angewendet wird, um jede Detektion mit einer Pulsbreite größer als ein vorbestimmter Wert zu unterdrücken.

## Claims

1. Apparatus (1) for analysing a blood sample comprising:
- a dilution and analysis container (2) suitable for containing an analysis solution (3) obtained by dilution of the blood sample in at least one reagent, this analysis solution having a dilution rate suitable for measuring haemoglobin,
- a circulation vessel (4) comprising a parallelepipedal vessel (5), an injector (13) and inlets (7, 8) for the sheath liquid,
- a hydraulic system (6),
- an optical measurement device (9) for measuring leukocyte sub-populations of white blood cells contained in the analysis solution,
- an electronic unit (10) for guiding transfers and measuring the analysis solution,
wherein
- the dilution and analysis container (2) is directly connected to the circulation vessel (4) so that the analysis solution (3) used to measure the haemoglobin level is also used to measure leukocyte sub-populations of white blood cells, with a defined dilution rate having a ratio of less than 1/160,
- the circulation vessel (4) is of the active sheath type,
- the optical measurement device (9) is associated with the circulation vessel,
- the injector has an inner diameter of 200 µm, and
- the circulation vessel (4) and the hydraulic system (6) are designed to generate a flow of the analysis solution (3), by active sheath hydrofocusing, having a diameter comprised between 70 and 90 µm so as to have sufficient cells for the optical measurement.

2. Apparatus according to claim 1, **characterized in that** the flow of the analysis solution (3) has a diameter of 80 µm for the optical measurement.

3. Apparatus according to claim 1 or 2, **characterized in that** the parallelepipedal vessel (5) has an inner side of 250 µm .

4. Apparatus according to any one of the preceding claims, **characterized in that** the dilution and analysis container (2) comprises a spectrophotometer (11) to carry out a haemoglobin measurement directly from the analysis solution (3) contained in said container.

5. Apparatus according to any one of the preceding claims, **characterized in that** the dilution and analysis container (2) comprises an electrical device (12) for measuring the resistivity of the analysis solution contained in said container.

6. Apparatus according to any one of the preceding claims, **characterized in that** the optical measurement device (9) is also configured to count and differentiate the cells contained in the analysis solution (3).

7. Apparatus according to any one of the preceding claims, **characterized in that** the circulation vessel (4) comprises pressure means parametrized so that cells in the analysis solution circulate in a flow without a velocity gradient over a section of the flow.

8. Method for analysing a blood sample, this method comprising the following steps:
- measuring a haemoglobin level of an analysis solution (3) obtained by mixing the blood sample with at least one reagent in a dilution and analysis container (2),
wherein it also comprises the following steps:
- direct transfer, without dilution, of said analysis solution (3) towards a circulation vessel (4),
- generating, by active sheathing in the circulation vessel (4) and by means of an injector (13) having an inner diameter of 200 µm, a flow of the analysis solution (3), this flow having a diameter comprised between 70 and 90 µm,
- optical measurement of the leukocyte sub-populations in the flow of the analysis solution (3), this analysis solution (3) having the same dilution rate as the analysis solution (3) used to measure the haemoglobin level; this dilution rate being defined with a ratio of less than 1/160.

9. Method according to claim 8, **characterized in that** a resistivity measurement is also carried out directly from said analysis solution (3) in said dilution and analysis container (2).

10. Method according to claim 8 or 9, **characterized in that** during the optical measurement, cells are detected, and for each detected cell, a width filter is applied to signals originating from the optical measurement to eliminate any detection having a pulse width greater than a predetermined value.
